# EUROPEAN PATENT APPLICATION

(11) **EP 2 506 547 A1**
(43) Date of publication of application: **03.10.2012**
(21) Application number: 10833458.2
(22) Date of filing: 19.07.2010
(51) Int. Cl.: H04M 11/02, H04N 7/18

(54) **DOOR PHONE APPARATUS FOR A DUAL MONITOR TYPE KITCHEN TELEVISION AND OPERATING METHOD THEREOF**

(30) Priority: 24.11.2009 KR 20090116578; 13.04.2010 KR 20100033837
(71) Applicant: Jungsan Enterprise Co., Ltd., Ulsan 689-934 (KR)
(72) Inventor: PARK, Ho-Young, Busan 612-080 (KR); PARK, Byung-Wok, Busan 612-080 (KR)
(74) Representative: Roos, Peter
(86) International application number: PCT/KR2010/004684
(87) International publication number: WO 2011/065646

(57) **Abstract**

Provided is a dual monitor type television (TV) door phone device for a kitchen, which has TV, radio, and door phone functions, and a method of operating the same. The dual monitor type TV door phone includes: a body panel including a first monitor for outputting an image on a front surface; an auxiliary panel including a second monitor for outputting the image on a front surface, and capable of foldable movement by being hinged to a bottom surface of the body panel; and a gravitational location sensor detecting a moved location of the auxiliary panel and controlling power supply to the second monitor according to the moved location. According to the dual monitor type TV door phone and the method, since a door phone image for displaying a visitor can be immediately checked through the first monitor installed in front of the body panel even when the foldable second monitor installed at the bottom surface of the body panel is horizontally folded below the body panel, not only utility convenience is increased but also a space occupied by the second monitor is removed, thereby increasing space usability.

## Description

### BACKGROUND OF THE INVENTION

### 1. Field of the Invention

The present invention relates to a dual monitor type television (TV) door phone device for a kitchen, and more particularly, to a dual monitor type TV door phone device for a kitchen, which is installed in a kitchen and has a TV function, a radio function, and a door phone function.

### 2. Description of the Related Art

Today, a television (TV) door phone for a kitchen, which has a TV function, a radio function, and a door phone function, is often installed to a bottom of a sink in a kitchen for a housewife who spends most of her time in the kitchen. Accordingly, the housewife is able to watch TV, listen to a radio, and check a visitor while working in the kitchen, such as preparing a meal or washing dishes.

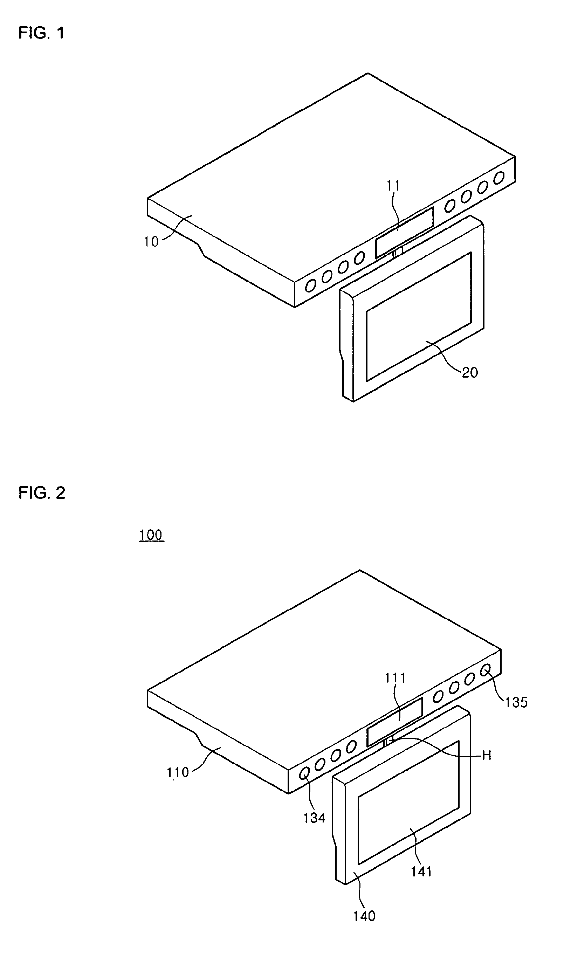

Conventional TV door phones for a kitchen currently being manufactured and sold in domestic and foreign countries have the monotonous and same structure as shown in FIG. 1. In other words, the conventional TV door phone has a body 10 that is fixed to a bottom of a sink, includes various electronic circuits, and has a rectangular shape, and a monitor 20 hinged at the bottom of the body 10 so as to move up, down, left, and right.

Also, a display window 11 including a single color light emitting display (LED) or a single color liquid crystal display (LCD) displaying only characters, numbers, or symbols is installed to a front center of the body 10 so as to indicate a time, a radio frequency, a volume, or an operating state.

The monitor 20 moves up and down so that, when the monitor 20 is not used, the monitor 20 is moved backward and horizontally folded below the body 10, thereby increasing space usability and preventing the monitor 20 from interfering with kitchen work. Also, the monitor 20 moves to right and left so as to remove a limit to a viewing angle of the monitor 20 and increase audio visual of the monitor 20 in a small space.

According to such conventional TV door phones, the monitor 20 contacts the bottom of the body 10 by horizontally folding the monitor 20 when the monitor 20 is not used, but when a visitor rings a doorbell, it is unable to look at the visitor through the monitor 20.

Accordingly, even when a user is not watching TV through the conventional TV door phone, the monitor 20 is always vertically placed below the body 10 so as to check the visitor immediately.

Moreover, despite the user mostly does not watch TV in the kitchen through the conventional TV door phone while working in the kitchen since the monitor 20 is small, a dead space is generated due to the monitor 20 vertically placed below the body 10, and thus kitchen tools or other items cannot be placed around the monitor 20, and it is difficult to do work near the monitor 20. In addition, a space below a sink is mostly small, and thus it is difficult to use the dead space by using the conventional TV door phones.

### SUMMARY OF THE INVENTION

The present invention provides a dual monitor type television (TV) door phone device for a kitchen, which has a dual monitor structure including a first monitor and a second monitor, and is capable of checking an image of a door phone through the first monitor even when the second monitor is folded.

According to an aspect of the present invention, there is provided a dual monitor type television (TV) door phone device for a kitchen, which has TV, radio, and door phone functions, the dual monitor type TV door phone including: a body panel including a first monitor for outputting an image on a front surface; an auxiliary panel including a second monitor for outputting the image on a front surface, and capable of foldable movement by being hinged to a bottom surface of the body panel; and a gravitational location sensor detecting a moved location of the auxiliary panel and controlling power supply to the second monitor according to the moved location.

The gravitational location sensor may block power supplied to the second monitor when the second monitor is in a horizontal state as the auxiliary panel is folded to a bottom surface of the body panel, and supply power to the second monitor when the second monitor is in a vertical state as the auxiliary panel is unfolded.

The gravitational location sensor may include an iron bead moveable according to movement of the auxiliary panel and be installed to have an upward tilt angle with respect to the horizontal state of the second monitor so as to detect the moved location through movement of the iron bead.

The body panel may include a video processor for outputting the image, and the video processor may include: a video amplifier for amplifying an image signal of a TV or a door phone; and a dual multiplexer for outputting the same image or different images to the first and second monitors by switching the image signal received from the video amplifier according to an external control signal.

The auxiliary panel may be detachably combined to the body panel, and when the auxiliary panel is removed, the TV, radio, and door phone functions may be performed through the body panel having the first monitor.

The first monitor may be realized in a touch screen type and include a plurality of touch type manipulation buttons for manipulating the TV, radio, and door phone functions.

According to another aspect of the present invention, there is provided a method of operating the dual monitor type TV door phone, the method including: displaying a current time on the first monitor when power is supplied to the dual monitor type TV door phone; determining whether a doorbell signal received from an external home auto body is in an on state; when the doorbell signal is in an on state, determining whether the second monitor is in a horizontal state by using the gravitational location sensor; when the second monitor is in the horizontal state, blocking power supplied to the second monitor and output of a visitor image; and outputting the visitor image received from the home auto body only through the first monitor.

The method may further include: when the second monitor is not in the horizontal state, determining whether a TV image is output through the second monitor; when the TV image is not output through the second monitor, outputting the visitor image through the second monitor; when the TV image is output through the second monitor, determining whether an external input signal to forcibly display the visitor image is received; when the external input signal is received, displaying the visitor image through the second monitor; and when the external input signal is not received, maintaining the output of the TV image through the second monitor.

### BRIEF DESCRIPTION OF THE DRAWINGS

The above and other features and advantages of the present invention will become more apparent by describing in detail exemplary embodiments thereof with reference to the attached drawings in which:
FIG. 1 is a perspective view of a conventional television (TV) door phone device;
FIG. 2 is a perspective view of a dual monitor type TV door phone device for a kitchen, according to an embodiment of the present invention;
FIG. 3 is a block diagram of the dual monitor type TV door phone device of FIG. 2;
FIGS. 4A and 4B are block diagrams of respectively a first monitor and a second monitor of FIG. 2;
FIG. 5 is a lateral view when the second monitor of FIG. 2 is vertically unfolded;
FIG. 6 is a lateral view when the second monitor of FIG. 2 is horizontally folded;
FIG. 7 is a perspective view when the second monitor of FIG. 2 is removed;
FIG. 8 is a detailed block diagram of a video processor of FIG. 3; and
FIG. 9 is a flowchart illustrating a method of processing an image signal by using the dual monitor type TV door phone device of FIG. 2.

### DETAILED DESCRIPTION OF THE INVENTION

Hereinafter, the present invention will be described more fully with reference to the accompanying drawings, in which exemplary embodiments of the invention are shown.

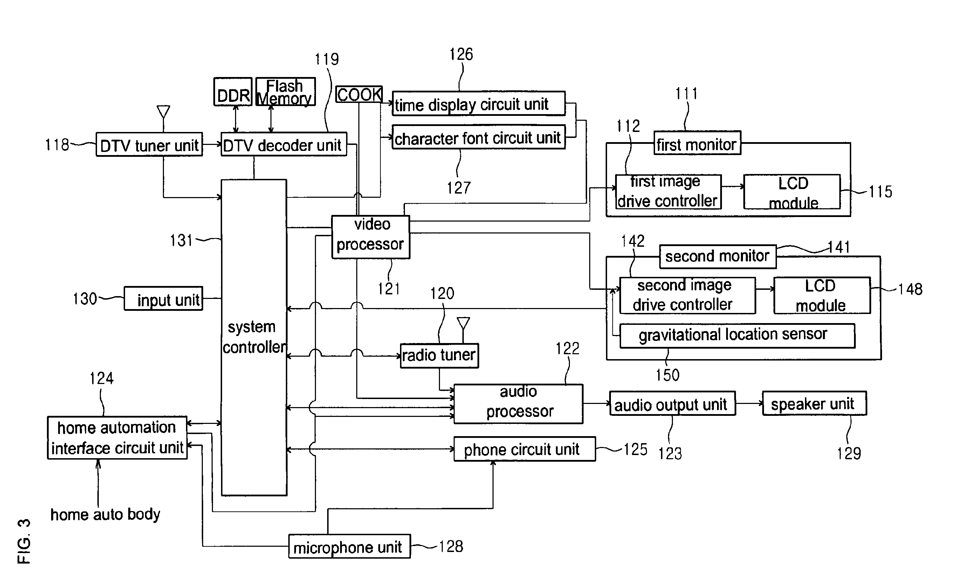

FIG. 2 is a perspective view of a dual monitor type TV door phone device 100 for a kitchen, according to an embodiment of the present invention, and FIG. 3 is a block diagram of the dual monitor type TV door phone device 100 of FIG. 2.

Referring to FIGS. 2 and 3, the dual monitor type TV door phone device 100 is a TV door phone device for a kitchen, which includes TV, radio, and door phone functions, and in detail, is one of home automation devices installed below a sink in a kitchen and including a TV function, a radio function, and a door phone function so that a user can watch TV, listen to a radio, and check a visitor without having to leave the kitchen.

The dual monitor type TV door phone device 100 includes a body panel 110, an auxiliary panel 140, and a gravitational location sensor 150. The body panel 110 includes a plurality of manipulation buttons 134, and an infrared (IR) sensor 135 for a remote controller for various manipulations, in front of the body panel 110.

- Also, the body panel 110 includes a first monitor 111 for an image output in a front center of the body panel 110. Here, the image output means an image output related to the TV, radio, and door phone functions. Accordingly, the first monitor 111 not only displays a TV or a door phone image, but also a time, a radio frequency, or an operating state. The first monitor 111 displays the door phone image for the door phone function according to a moved location of a second monitor 141, and has a size as small as possible so as not to cause inconvenience.

Aside from such various displays, the first monitor 111 may be realized in a touch screen type including a plurality of touch type manipulation buttons to manipulate the TV, radio, and door phone functions. By using the touch type manipulation buttons, the user may easily and conveniently operate the dual monitor type TV door phone device 100 by looking at characters having button shapes and a schematized user interface (UI) shown on a touch screen.

As such, when the first monitor 111 is a touch screen type, the touch type manipulation buttons may be used instead of the manipulation buttons 134 in front of the body panel 110, and thus the manipulation buttons 134 may be removed. Alternatively, the touch type manipulation buttons may be used along with the manipulation buttons 134.

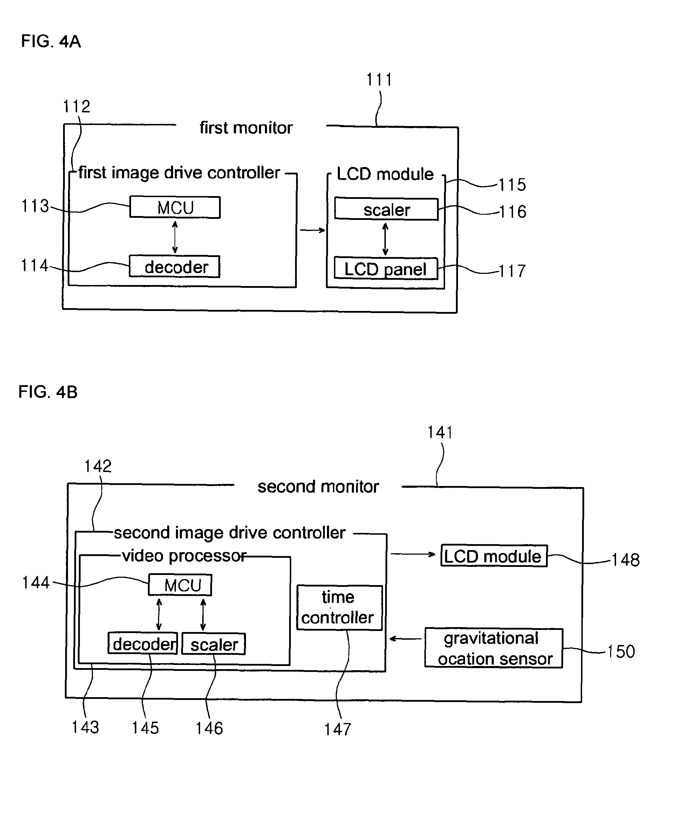

A detailed structure of the first monitor 111 is shown in FIGS. 3 and 4A. The first monitor 111 includes a first image drive controller 112 and a liquid crystal display (LCD) module 115. The first image drive controller 112 includes a decoder 114 for receiving and decoding an image signal amplified by a video processor 121 of FIG. 3 to an encoded image signal, and a machine control unit (MCU) 113 for controlling an output image of the first monitor 111.

The LCD module 115 is a subminiaturized LCD module including a scaler 116 and an LCD panel 117, which are integrated, for displaying the output image. A reason for manufacturing the first monitor 111 to be simple and compact is to minimize a production cost increased due to the LCD module 115.

Also, the auxiliary panel 140 is capable of foldable movement by being combined to a hinge H at the bottom center of the body panel 110, and includes the second monitor 141 for an image output in front of the auxiliary panel 140. Here, the auxiliary panel 140 is capable of moving up and down, and right and left by the hinge H.

A detailed structure of the second monitor 141 is shown in FIGS. 3 and 4B. The second monitor 141 includes a second image drive controller 142 and an LCD module 148. The second image drive controller 142 is connected to the video processor 121 of FIG. 3, and includes a video processor 143 in which a decoder 145, a scaler 146, and an MCU 144 are formed in one chip, and a time controller 147 for controlling time. The LCD module 148 is small and medium-sized LCD module for displaying an output image.

The gravitational location sensor 150 detects the moved location of the auxiliary panel 140, and controls power supply to the second monitor 141 according to the moved location. In other words, the gravitational location sensor 150 controls power supplied to the second monitor 141 by detecting a location of the LCD module 148.

When the second monitor 141 is in a horizontal state as the auxiliary panel 140 is folded to the bottom surface of the body panel 110, power supplied to the second monitor 141 is blocked so that no image is displayed, and when the second monitor 141 is in a vertical state as the auxiliary panel 140 is unfolded, power is supplied to the second monitor 141 to display an image.

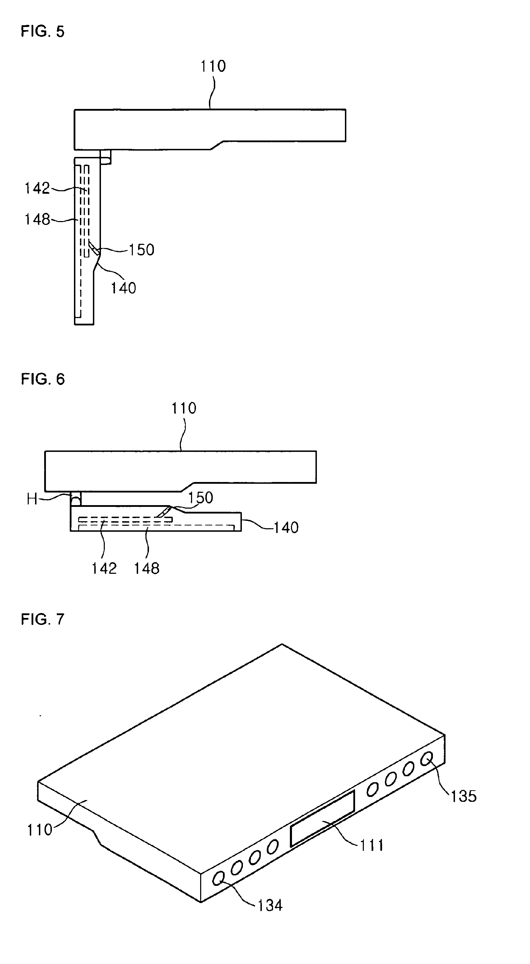

FIGS. 5 and 6 are lateral views respectively when the second monitor 141 of FIG. 2 is vertically unfolded and is horizontally folded. The gravitational location sensor 150 includes an iron bead moveable according to the movement, and is installed to have an upward tilt angle with respect to the horizontal state of the second monitor 141, thereby detecting the moved location via movement of the iron bead.

For example, referring to FIGS. 5 and 6, the gravitational location sensor 150 is integrated to the second image drive controller 142, and is installed to upwardly tilt in an angle of 10° to 30° while the second monitor 141 is horizontally folded. The gravitational location sensor 150 is upwardly tilted so that an operation of the gravitational location sensor 150 for detecting a location via the movement of the iron bead moving up and down is accurate.

According to such a structure, a door phone image for checking a visitor is provided through the first monitor 111 even when the second monitor 141 installed at the bottom surface of the body panel 110 is being horizontally folded, and thus utility convenience may be increased and public order may be reinforced by immediately checking the visitor. Also, a dead space due to the second monitor 141 may be removed, thereby increasing space usability.

Moreover, when the auxiliary panel 140 is detachably combined to the body panel 110, i.e., even when the auxiliary panel 140 is removed as shown in FIG. 7, not only the TV, radio, and door phone functions are performed, but also time or an operating state is displayed on the first monitor 111 of the body panel 110. Thus, even when only the body panel 110 is installed without the second monitor 141, the door phone function is still performed, and the body panel 110 may be used as a low-priced radio door phone device.

The body panel 110 includes various elements for the TV, radio, and door phone functions, which will be simply described with reference to FIG. 3.

The body panel 110 includes a digital TV (DTV) tuner unit 118 for receiving a DTV broadcast, a DTV decoder unit 119 for decoding an encoded signal of the DTV broadcast, a radio tuner 120 for receiving a radio broadcast, the video processor 121 for amplifying an image signal to be displayed on the first or second monitor 111 or 141 and distributing the image signal according to a control signal, an audio processor 122 for processing an audio signal, an audio output unit 123 for outputting the processed audio signal, a home automation interface circuit unit 124 connected to home automation, a phone circuit unit 125 for a door phone, a time display circuit unit 126 for displaying time, a character font circuit unit 127 for displaying characters, a microphone unit 128 for receiving voice, a speaker unit 129 for outputting voice, an input unit 130 for receiving a manipulation button signal and a remote controller signal, and a printed circuit board including a system controller 131 for controlling the entire system of FIG. 3.

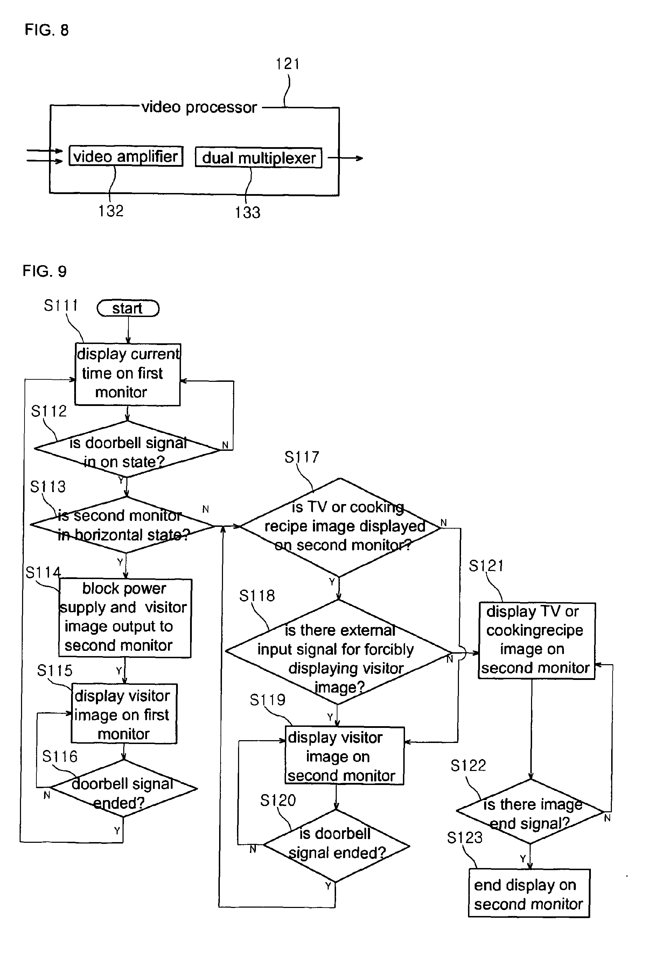

FIG. 8 is a detailed block diagram of the video processor 121 of FIG. 3. Referring to FIG. 8, the video processor 121 includes a video amplifier 132 for amplifying an image signal, and a dual multiplexer 133 for distributing the image signal, as elements for outputting an image. Here, the image signal is related to the TV and door phone functions.

The dual multiplexer 133 outputs the same image or different images to the first and second monitors 111 and 141 by switching an image signal received from the video amplifier 132 according to an external control signal.

Here, when the video amplifier 132 and the dual multiplexer 133 are installed before a digital-analog converter, signal attenuation and external noise that may be generated while switching the image signal may be prevented, and a production cost may be reduced by remarkably reducing signal lines to be switched.

Meanwhile, the first monitor 111 is programmed to basically display a time, an operating state, and a door phone image according to a control signal of the system controller 131, but a TV broadcast, a cooking recipe image, or another external image may be displayed by changing a control program.

Also, when the second monitor 141 is vertically unfolded, the second monitor 141 is programmed to display a TV broadcast, a cooking recipe image, or another external image according to manipulation of the manipulation button 134, a touch screen, or a remote controller.

However, when a doorbell signal from a home auto body is detected by the system controller 131, a door phone image is displayed according to a method of processing an image shown in FIG. 9. The method will be described in detail later with reference to FIG. 9.

Here, the door phone image may be displayed on both of the first and second monitors 111 and 141, or different images may be displayed on the first and second monitors 111 and 141, i.e., the door phone image may be displayed on the first monitor 111 and a TV broadcast or a cooking recipe image may be displayed on the second monitor 141. Such operations will now be described in detail.

First, when the second monitor 141 is vertically unfolded below the body panel 110 as shown in FIG. 5, the second monitor 141 is in a standby mode, where only basic power is supplied to the second monitor 141, and only time and operating state are displayed on the first monitor 111.

At this time, when a doorbell signal is generated as a visitor presses a doorbell, the system controller 131 recognizes the doorbell signal and generates a control signal. Then, a door phone image signal is input to the video processor 121, amplified through the video amplifier 132, divided into two same door phone image signals through the dual multiplexer 133, and displayed on the first and second monitors 111 and 141.

In other words, one of the two same door phone image signals is input to the first monitor 111, decoded by the decoder 114 of the first image drive controller 112, and displayed on the LCD module 115, and the other is input to the second monitor 141, processed through the decoder 145, the scaler 146, and the time controller 147 of the second image drive controller 142, and displayed on the LCD module 148.

Here, when the iron bead is disposed below the gravitational location sensor 150 as shown in FIG. 5, the door phone image is displayed on the second monitor 141 since the gravitational location sensor 150 transmits a location signal indicating that the second monitor 141 is in a vertical state to the system controller 131. Also, when a signal indicating that the door phone image signal is completed is transmitted to the system controller 131 through the home automation interface circuit unit 124, the second monitor 141 returns to an initial standby mode.

When the DTV broadcast is to be watched through the second monitor 141, the manipulation button 134, the touch screen, or the remote controller may be used. In other words, when an input signal for watching the DTV broadcast is input to the input unit 130 through the manipulation button 134, the touch screen, or the remote controller, the DTV tuner unit 118 receives a DTV broadcast image signal according to a control signal of the system controller 131, and the DTV decoder unit 119 decodes and transmits the DTV broadcast image signal to the video processor 121. Input and output signals of the touch screen are also connected to the system controller 131, and thus are controlled and executed by the system controller 131.

Then, the video processor 121 amplifies the DTV broadcast image signal through the video amplifier 132 and transmits the amplified DTV broadcast image signal to the second monitor 141 through the dual multiplexer 133. Accordingly, the DTV broadcast is displayed on the second monitor 141, and thus the user can watch the DTV broadcast.

Unlike FIG. 5, when the second monitor 141 is horizontally folded on the bottom surface of the body panel 110 as shown in FIG. 6, the iron bead is located at the top of the gravitational location sensor 150. At this time, the gravitational location sensor 150 transmits a location signal indicating that the second monitor 141 is in the horizontal state to the system controller 131. Then, the system controller 131 blocks power supplied to the second monitor 141, so that the second monitor 141 is in an off state and the first monitor 111 is in a standby mode indicating only time and an operating state.

Here, when a doorbell signal is generated as the visitor presses a doorbell, the system controller 131 recognizes the doorbell signal and generates a control signal. Accordingly, a door phone image signal is input to the video processor 121, and is amplified by the video amplifier 132.

The amplified door phone image signal is divided into two same door phone image signals through the dual multiplexer 133 and transmitted to the first and second monitors 111 and 141. However, since power is not supplied to the second monitor 141, the door phone image signal is displayed only on the first monitor 111.

In other words, even when the second monitor 141 is turned off and is in the horizontal state, a door phone image may be displayed on the first monitor 111 installed in front of the body panel 110. When a signal indicating that the door phone image signal is completed is transmitted to the system controller 131 through the home automation interface circuit unit 124, the first monitor 111 returns back to an initial standby mode.

Accordingly, since the door phone image is displayed on the first monitor 111 installed in front of the body panel 110 even when the second monitor 141 is in the horizontal state, the door phone function may be performed without having to vertically unfold the second monitor 141.

Thus, a dead space occupied by the second monitor 141 being vertically unfolded for the door phone function is removed, thereby using a space below the sink to the maximum.

Also, as described above, since the second monitor 141 is removable from the body panel 110 by the hinge H, the first monitor 111 may solely perform the radio, TV, and door phone functions even when the second monitor 141 is removed from the body panel 110. Accordingly, low space usability and a wasted space, which are generated by the second monitor 141, may be respectively improved and removed. Further, the body panel 110 may be used as a low-priced radio door phone device without the second monitor 141.

FIG. 9 is a flowchart illustrating a method of processing an image signal by using the dual monitor type TV door phone device 100 of FIG. 2.

When power is supplied to the dual monitor type TV door phone device 100, the first monitor 111 displays a current time, in operation S111. So as to display the current time, the first monitor 111 is programmed by the system controller 131 to basically always display the current time.

Then, it is determined whether a doorbell signal received from an external home auto body is in an on state, in operation S112. In other words, the system controller 131 determines whether the doorbell signal is in the on state as a doorbell is pressed.

If the doorbell signal is in the on state, it is determined whether the second monitor 141 is in the horizontal state by using the gravitational location sensor 150, in operation S113. In other words, when the doorbell signal is in the on state, the gravitational location sensor 150 transmits the horizontal or vertical state of the second monitor 141 in a high or low signal level, so that the system controller 131 determines the horizontal or vertical state of the second monitor 141.

Here, when it is determined that the second monitor 141 is in the horizontal state, power supply and visitor image output to the second monitor 141 are blocked in operation S114. In other words, when the second monitor 141 is in the horizontal state, the power supply and the visitor image output to the second monitor 141 are blocked through the system controller 131 and the video processor 121.

Then, the visitor image received from the home auto body is output and displayed only on the first monitor 111, in operation S115.

Next, the system controller 131 determines whether the doorbell signal is ended according to a call ending signal or a compulsive ending signal by the manipulation button 134, the touch screen, or the remote controller, in operation S116. When it is determined that the doorbell signal is ended as a door phone call is ended, operation S111 is performed where the first monitor 111 returns back to an initial state of displaying only time. Alternatively, when it is determined that the doorbell signal is not ended, operation S115 is continuously performed.

When it is determined that the second monitor 141 is not in the horizontal state in operation S113, it is determined whether a TV image, a cooking recipe image, or the like is output to the second monitor 141, in operation S117. When the second monitor 141 is in the vertical state instead of the horizontal state, it is determined whether the TV image, cooking recipe image, or the like is viewed on the second monitor 141, through the system controller 131.

When it is determined that the TV image, the cooking recipe image, or the like is output to the second monitor 141 in operation S117, it is determined whether an external input signal for forcibly displaying the visitor image is received in operation S118. In other words, when the TV image, the cooking recipe image, or the like is viewed on the second monitor 141, the system controller 131 determines whether there is the external input signal for forcibly displaying the visitor image from the manipulation button 134, the touch screen, or the remote controller, in operation S118.

If the external input signal for forcibly displaying the visitor image is received, the visitor image is displayed on the second monitor 141 in operation S119, by using the system controller 131 and the video processor 121.

Then, the system controller 131 determines whether the doorbell signal is ended in operation S120. If the doorbell signal is ended as a call with the visitor is ended, operation S117 is performed where the TV image, the cooking recipe image, or the like is displayed on the second monitor 141 according to control of the system controller 131.

Alternatively, if it is determined that the TV image, the cooking recipe image, or the like is not displayed on the second monitor 141 in operation S117, the visitor image is output on the second monitor 141 in operation S119. In other words, when the TV image, the cooking recipe image, or the like is not displayed on the second monitor 141, the visitor image is displayed on the second monitor 141 through the system controller 131 and the video processor 121.

Alternatively, if it is determined that the external input signal is not received in operation S118, the TV image, the cooking recipe image, or the like is continuously output to the second monitor 141, in operation S121. In other words, if there is no signal to forcibly display the visitor image, the second monitor 141 continuously displays the TV image, the cooking recipe image, or the like.

Then, it is determined whether there is an image end signal for ending the TV image, the cooking recipe image, or the like in operation S122. If the image end signal is received from the manipulation button 134, the touch screen, or the remote controller, the second monitor 141 ends display according to control of the system controller 131, in operation S123. If the image end signal is not received, the second monitor 141 continuously maintains displaying the TV image, the cooking recipe image, or the like in operation S121.

As such, according to the method, the current time is basically always displayed when power is supplied to the first monitor 111. Here, when the doorbell signal is in the on state, the first monitor 111 immediately displays the visitor image, and it is determined whether the second monitor 141 is in the horizontal state or the vertical state by the gravitational location sensor 150.

If the second monitor 141 is in the horizontal state, the power supply and the visitor image output to the second monitor 141 are blocked through the system controller 131 and the video processor 121. Alternatively, if the second monitor 141 is in the vertical state, the visitor image is displayed on the second monitor 141 when there is a signal to forcibly display the visitor image according to the external input signal regardless of whether the TV image, the cooking recipe image, or the like is displayed on the second monitor 141, and the second monitor 141 returns to a previous state when the doorbell signal is ended. If the second monitor 141 is returned to a TV watching state, an image being displayed on the second monitor 141 is stopped when an image display ending signal regarding the second monitor 141 is input to the system controller 131 while viewing the TV image, the cooking recipe image, or the like.

According to the dual monitor type TV door phone device for a kitchen and the method of operating the same, since a door phone image for displaying a visitor can be immediately checked through the first monitor installed in front of the body panel even when the foldable second monitor installed at the bottom surface of the body panel is horizontally folded below the body panel, not only utility convenience is increased but also a space occupied by the second monitor is removed, thereby increasing space usability.

Also, since time, an operating state, a door phone image, and a TV image can be displayed through the first monitor even when the second monitor is completely removed form the body panel, the first monitor can be used as a low-priced door phone device, thereby not only reducing the costs but also basically removing a space occupied by the second monitor.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A dual monitor type television (TV) door phone device for a kitchen, which has TV, radio, and door phone functions, the dual monitor type TV door phone comprising:
a body panel comprising a first monitor for outputting an image on a front surface;
an auxiliary panel comprising a second monitor for outputting the image on a front surface, and capable of foldable movement by being hinged to a bottom surface of the body panel; and
a gravitational location sensor detecting a moved location of the auxiliary panel and controlling power supply to the second monitor according to the moved location.

2. The dual monitor type TV door phone of claim 1, wherein the gravitational location sensor blocks power supplied to the second monitor when the second monitor is in a horizontal state as the auxiliary panel is folded to a bottom surface of the body panel, and supplies power to the second monitor when the second monitor is in a vertical state as the auxiliary panel is unfolded.

3. The dual monitor type TV door phone of claim 2, wherein the gravitational location sensor includes an iron bead moveable according to movement of the auxiliary panel and is installed to have an upward tilt angle with respect to the horizontal state of the second monitor so as to detect the moved location through movement of the iron bead.

4. The dual monitor type TV door phone of claim 1, wherein the body panel comprises a video processor for outputting the image, and
the video processor comprises:
a video amplifier for amplifying an image signal of a TV or a door phone; and
a dual multiplexer for outputting the same image or different images to the first and second monitors by switching the image signal received from the video amplifier according to an external control signal.

5. The dual monitor type TV door phone of claim 1, wherein the auxiliary panel is detachably combined to the body panel, and when the auxiliary panel is removed, the TV, radio, and door phone functions are performed through the body panel having the first monitor.

6. The dual monitor type TV door phone of claim 1, wherein the first monitor is realized in a touch screen type and comprises a plurality of touch type manipulation buttons for manipulating the TV, radio, and door phone functions.

7. A method of operating the dual monitor type TV door phone of any one of claims 1 and 6, the method comprising:
displaying a current time on the first monitor when power is supplied to the dual monitor type TV door phone;
determining whether a doorbell signal received from an external home auto body is in an on state;
when the doorbell signal is in an on state, determining whether the second monitor is in a horizontal state by using the gravitational location sensor;
when the second monitor is in the horizontal state, blocking power supplied to the second monitor and output of a visitor image; and
outputting the visitor image received from the home auto body only through the first monitor.

8. The method of claim 7, further comprising:
when the second monitor is not in the horizontal state, determining whether a TV image is output through the second monitor;
when the TV image is not output through the second monitor, outputting the visitor image through the second monitor;
when the TV image is output through the second monitor, determining whether an external input signal to forcibly display the visitor image is received;
when the external input signal is received, displaying the visitor image through the second monitor; and
when the external input signal is not received, maintaining the output of the TV image through the second monitor.
